# EUROPÄISCHE PATENTSCHRIFT

(11) **EP 1 686 508 B1**
(45) Veröffentlichungstag und Bekanntmachung des Hinweises auf die Patenterteilung: **02.04.2008**
(21) Anmeldenummer: 06001377.8
(22) Anmeldetag: 24.01.2006
(51) Int. Cl.: G06K 9/00

(54) **Anordnung zur optoelektronischen Aufnahme von grossflächigen Fingerabdrücken**
System for optoelectronic capture of large area fingerprints
Dispositif destiné à la saisie optoélectronique d'empreintes digitales de grande surface

(30) Priorität: 28.01.2005 DE 102005004640
(43) Veröffentlichungstag der Anmeldung: 02.08.2006
(73) Patentinhaber: Cross Match Technologies GmbH, 07743 Jena (DE)
(72) Erfinder: Reinhold, Bernd, Dr., 07749 Jena (DE); Richter, Uwe, 07747 Jena (DE); Hillmann, Jürgen, 07745 Jena (DE)
(74) Vertreter: Freitag, Joachim

(56) Entgegenhaltungen:
- US-A- 5 526 436
- US-A- 5 528 355
- US-A- 6 038 332
- US-B1- 6 175 407

## Beschreibung

Die Erfindung betrifft eine Anordnung zur optoelektronischen Aufnahme von großflächigen Fingerabdrücken, insbesondere zur Erfassung von ganzen Handflächenabdrücken. Sie findet Anwendung bei der Aufnahme von Personenmerkmalen zur erkennungsdienstlichen Erfassung und forensischen Identitätsermittlung.

Beim polizeilichen Erkennungsdienst werden Fingerabdrücke und Handabdrücke von Personen genommen, um damit deren Identität feststellen zu können. Die Aufnahme der Muster der Papillarlinien an Finger und Hand wird seit mehr als hundert Jahren in klassischer Weise durch Einschwärzen der betreffenden Flächen der Finger oder Hand und nachfolgendes Abdrücken auf Papier durchgeführt. Mit der Verfügbarkeit leistungsfähiger elektronischer Sensoren und Computer sind Anordnungen bekannt geworden, die der direkten elektronischen Erfassung der Muster ohne den Umweg über Farbe, Papier und Einscannen des Abdruckbildes dienen. Dadurch kann die elektronische Erfassung wesentlich schneller und vor allem in einer höheren Qualität vorgenommen werden.

Während die elektronische Erfassung von Abdrücken einzelner Finger (genauer: der oberen zwei Glieder derselben) in vielfältiger Weise publiziert wurde, sind zur Erfassung der Handfläche bislang nur wenige Lösungen bekannt. Dabei handelt es sich um Anordnungen, die entweder im Format beschränkt sind und lediglich die Erfassung eines Teils der Handfläche in einem Vorgang ermöglichen, oder um Anordnungen, die zwar die volle Hand im Format erfassen können, aber dabei nicht zuverlässig die für solche Anwendungen notwendige Qualität der Bilder erreichen.

Die Offenlegungsschrift US 2002/0090147 A1 beschreibt eine Anordnung zur optischen Aufnahme der Muster einer Handinnenfläche, bei der von einer ebenen Aufnahmefläche eines Prismas mittels gestörter interner Totalreflexion (FTIR - frustrated total internal reflection) das Muster der aufliegenden Papillarlinien als Bild sichtbar gemacht wird. Dazu ist das Prisma aus einem optischen Vollmaterial (z.B. Glas) ortsfest gelagert und in einen optischen Abbildungsstrahlengang zur Abbildung der Handauflagefläche auf einen Bildsensor eingebunden. Im Strahlengang befindet sich ein in zwei Achsen gesteuert kippbarer Spiegel mit dem die Auflösung des zweidimensionalen Bildaufnahmesensors durch ein spezielles Verfahren mit Mehrfachaufnahme von Bildern und nachfolgendes Zusammensetzen der Bilddaten gesteigert wird.
Nachteilig wirkt sich bei dieser Anordnung aus, dass Handinnenflächen mehr oder weniger konkav gewölbt sind und darum nicht vollständig in direkten Kontakt mit der Aufnahmefläche gelangen, so dass relativ große Bereiche (zumeist im Zentrum der Handfläche) unabgebildet (d.h. weiß, also leer) bleiben. Praktische Abhilfe kann durch Druckanwendung auf die Oberseite der aufgelegten Hand geschaffen werden. Das bringt bei der konkaven Handfläche jedoch nur bis zu einem gewissen Grad Verbesserungen der Abbildung, da durch den erhöhten Auflagedruck an den zuvor schon gut aufliegenden Handpartien die Papillarlinien zusammengedrückt, die gepressten Bereiche im Ergebnisbild sehr dunkel und kontrastarm und damit schwieriger auswertbar werden.

Die US 6,038,332 beschreibt eine Anordnung zur optischen Aufnahme der Muster auf der Innenfläche einer Hand. Dabei dient ein transparentes Halbrohr (längs geteiltes Glasrohr) mit seiner Mantelfläche als ortsfest Auflage für die Handfläche. Im Inneren wird durch einen sich linear entlang der Mantelfläche erstreckenden Lichtstab die Mantelfläche schräg beleuchtet über eine Maske sichergestellt, dass nur an der äußeren Auflagefläche der Hand gestreutes Licht über einen Spiegel in einen optischen Abbildungsstrahlengang eingekoppelt wird. Die Abbildung der Handfläche in ihrer zweiten Dimension wird mittels einer motorischen Drehung des Spiegels und einer Optik auf einem im Wesentlichen eindimensionalen Bildsensor erzeugt, in Form von (einander überlappenden) Teilbildern ausgelesen und zum Ergebnisbild zusammengesetzt.
Nachteilig ist, dass die aufliegenden Papillarlinien nach dem Streulichtprinzip sichtbar gemacht und abgebildet werden, so dass nach jedem Auflegen einer Hand die Rückstände von Schweißabsonderungen der Hand akkurat vollständig entfernt werden müssen, um Streulicht von Altabdrücken nicht erneut zu erfassen.

In der US 6,175,407 wird ebenfalls eine Anordnung zur optischen Aufnahme der Papillarlinienmuster auf der Innenfläche einer Hand offenbart, bei der ein Zylinder aus einem optischen Vollmaterial (z.B. Glas) drehbar gelagert ist und nahe zu dessen Stirnflächen Prismen angeordnet sind, um Beleuchtungslicht unter einem flachen Winkel zur Mantelfläche des Vollzylinders einzustrahlen und auf der gegenüberliegenden Seite in einen optischen Abbildungsstrahlengang auszukoppeln.
Die Mantelfläche des Zylinders dient dabei der Auflage jeweils eines Abschnitts der gesteckt daran abgerollten Handfläche. Mit dieser Anordnung wird unter Ausnutzung des Prinzips der gestörten Totalreflexion (FTIR) das Abbild der aufliegenden Papillarlinien stückweise sichtbar und über eine Optik auf einen eindimensionalen Bildsensor abgebildet. Die zweite Bilddimension wird über die Drehung des Vollzylinders mittels der Hand abgetastet und zeilenweise zum Ergebnisbild zusammengesetzt.
Wird die Hand jedoch zu schnell über den Zylindermantel gezogen, d.h. liegt die Winkelgeschwindigkeit oberhalb einer maximal zulässigen Geschwindigkeit, ist die Signalverarbeitung des Bildsensors nicht in der Lage, die Bilddaten synchronisiert zur Drehbewegung zu liefern, und folglich wird auch das Ergebnisbild nicht korrekt zusammengesetzt. Aus diesem Grund sind sehr komplexe Zusatzeinrichtungen vorgesehen zur Messung der Winkelgeschwindigkeit und zum Bremsen des Zylinders, wenn dessen vorgegebene Rotationsgeschwindigkeit überschritten wird.
Außerdem besteht das grundsätzliche Problem, dass die aufliegende Handfläche exakt ohne Relativbewegung zwischen Handfläche und Zylinderoberfläche bewegt werden muss, um drastische Fehler bei der Zusammensetzung des Ergebnisbildes zu vermeiden. Bei der praktischen Realisierung bestehen weitere Nachteile darin, dass es erhebliche Schwierigkeiten bereitet, die optischen Lichtwege an beiden Stirnflächen des drehbaren Zylinders beim Übergang auf die Prismen gegen Beeinträchtigung durch Staub und Feuchtigkeit abzudichten.

Ferner gehört gemäß der Veröffentlichung US 2004/0109245 eine Anordnung zur optischen Aufnahme der Muster von Handinnenflächen zum Stand der Technik, die einen konischen optischen Körper verwendet. Dabei wird ebenfalls das Prinzip der gestörten Totalreflexion (FTIR) genutzt, indem in einer Bohrung entlang der Symmetrieachse des Konus ein Stab mit einer linienförmigen Beleuchtung angebracht ist und der damit nahezu linienförmig beleuchtete Bereich der Konusmantelfläche nach unten durch die ebene Konusbasisfläche hindurch über eine abbildende Optik auf einen Zeilensensor abgebildet wird. Sensor und Optik sind starr an eine drehbare Scheibe gekoppelt, die außerdem fest mit dem Stab der linienförmigen Beleuchtung verbunden ist und alle drei Komponenten gemeinsam um die Symmetrieachse des Konus bewegt.
Auf diese Weise wird die Mantelfläche entlang der Mantellinien des Konus zeilenweise abgescannt und ein Bild der darauf einmalig aufgelegten Handinnenfläche ausgegeben als eine Anzahl von einzelnen Zeilen, die der in eine Ebene abgewickelten Mantelfläche des Konus entsprechen. Um das Bild aber in ein rechteckiges Format zu überführen, muss eine Koordinatentransformation und eine Nachabtastung (Resampling) des gesamten Bildes erfolgen. Diese Operation ist zwar eindeutig determiniert und mathematisch relativ leicht beschreibbar, führt aber zwangsläufig zu Kontrastgradienten in der wirksamen optischen Modulationsübertragungsfunktion (MTF). Deshalb muss die MTF im Rohbild einen wesentlich höheren Kontrast liefern als er (nach der Transformation) im Ergebnisbild durch die relevanten Standards gefordert wird. Dadurch sind die technischen Anforderungen an die Optik und den Sensor deutlich höher als dies bei einer Anordnung nach dem Zylinderprinzip der Fall ist. Das bedeutet, dass der technische Aufwand also erheblich größer ist oder im Ergebnisbild nur eine niedrigere Bildqualitätsklasse (Auflösung in dpi) realisiert werden kann.

Die US 5,528,355 offenbart einen transparenten Zylindersektor, auf den die Hand bei Erfassung aufgelegt wird. Lichtquelle und Sensoren sind parallel zu den Seitenflächen ("Schnittflächen") des Zylindersektors angeordnet, und die Bildaufnahme basiert auf totaler interner Reflektion. Bis auf die Form des Querschnitts des transparenten Auflagekörpers offenbart die US 5,526,436 eine ähnliche Anordnung.

Der Erfindung liegt die Aufgabe zugrunde, eine neue Möglichkeit zur Aufnahme des Papillarlinienmusters einer Hand zu finden, die bei einer einmaligen Auflage von Abruckflächen einer Hand eine vollständige optoelektronische Bildaufnahme gestattet, ohne bei ergonomisch günstig gekrümmter Auflagefläche Beleuchtungs- und Abbildungsstrahlengänge zu verwenden, die unzureichend gegen

Umgebungseinflüsse abgedichtet sind, oder Auflösungsverluste bzw. deutlich erhöhte elektronische Aufwände bei der Entzerrung der Bildaufnahmen hinnehmen zu müssen.

Erfindungsgemäß wird die Aufgabe bei einer Anordnung zur optoelektronischen Bildaufnahme von Abdrücken großflächiger konkaver Hautpartien, insbesondere ganzer Handabdrücke, bei der ein optischer Auflagekörper mit einer konvexen Auflagefläche zum Auflegen der Hautpartien mit großflächigem Kontakt zur Auflagefläche, um eine Bildaufnahme auf Basis einer gestörten internen Totalreflexion zu realisieren, eine Lichtquelle zum Beleuchten der Auflagefläche und ein Auslesestrahlengang zum Übertragen von unter Totalreflexion reflektiertem Beleuchtungslicht auf einen Bildsensor vorhanden sind, dadurch gekennzeichnet, dass der Auflagekörper die Grundform eines um eine Zylinderachse nicht notwendig vollständigen Zylinders aufweist, wobei der Auflagekörper eine Zylindermantelfläche mit ausreichendem Bogenmaß und Radius aufweist, um mindestens einen frei zugänglichen Teil der Mantelfläche als Auflagefläche für die großflächige konkave Hautpartie zur Verfügung zu stellen, dass der Auflagekörper eine erste und eine zweite Stirnfläche mit jeweils einer koaxial um die Zylinderachse angeordneten kegelförmigen Ausnehmung aufweist, wobei in die kegelförmige Ausnehmung der ersten Stirnfläche eine mindestens parallel zu einer Mantellinie der kegelförmigen Ausnehmung ausgedehnte Lichtquelle angeordnet ist und an die kegelförmige Ausnehmung der zweiten Stirnfläche ein Abbildungsstrahlengang angeschlossen ist, der einen entlang einer Seitenlinie der Mantelfläche des Auflagekörpers linienförmig ausgedehnten Streifen der Auflagefläche unter einem Totalreflexionswinkel in einer durch die Zylinderachse und den abgetasteten Streifen vorgegebenen Axialebene auf einen linear ausgedehnten Bildsensor abbildet, und dass der linear ausgedehnte Bildsensor und der Abbildungsstrahlengang um die Zylinderachse des Auflagekörpers synchron drehbar sind, um aufeinanderfolgend linienförmige Streifen der gestörten Totalreflexion an der beleuchteten Mantelfläche aufgrund der mit der Auflagefläche in Kontakt stehenden Hautpartien aufzunehmen und zu einem zweidimensionalen Bild der aufliegenden Hautpartie zusammensetzen zu können.

Als Auflagekörper wird vorteilhaft ein Zylindersektor, vorzugsweise Viertel- bis Halbzylinder verwendet.

Zur synchronen Drehung von Bildsensor und Elementen des Abbildungsstrahlengangs ist zweckmäßig ein um die Zylinderachse drehbar gelagertes Rohr vorhanden, wobei das Rohr außerhalb der kegelförmigen Ausnehmung des Auflagekörpers oder in einer koaxial zur Zylinderachse verlaufenden zylindrischen Ausnehmung des zylindrischen Auflagekörpers angeordnet ist. Für letztere Variante ist der Abbildungsstrahlengang vorteilhaft mittels einer Spiegelfläche in das Rohr und die zylindrische Ausnehmung hinein gefaltet.

Für die sukzessive Drehung des Rohres um die Zylinderachse ist zweckmäßig ein Schrittmotor vorgesehen, um Abbildungsstrahlengang und Bildsensor zur Abtastung einer Serie von Streifen der Auflagefläche des Auflagekörpers zu bewegen.

Wird in einer vorteilhaften Variante eine lineare Lichtquelle zur Beleuchtung eingesetzt, so ist diese starr und parallel zur Oberfläche der kegelförmigen Ausnehmung an der ersten Stirnseite des zylindrischen Auflagekörpers am Rohr befestigt und somit synchron zum Abbildungsstrahlengang um die Zylinderachse beweglich.

Die verwendete geeignet geformte Lichtquelle weist vorteilhaft einen nachgeordneten Diffuser auf, um auf der inneren Mantelfläche des Auflagekörpers mindestens entlang einer Mantellinie der Auflagefläche eine intensive Hintergrundbeleuchtung zu erzeugen. Als geeignet kann ein Flächenstrahler eingesetzt werden, der entlang der Oberfläche der kegelförmigen Ausnehmung des Auflagekörpers angeordnet ist, um über die gesamte Auflagefläche die innere Zylindermantelfläche des Auflagekörpers mit einer intensiven Hintergrundbeleuchtung zu beleuchten.

Zweckmäßig ist die Lichtquelle eine kollimierte lineare Lichtquelle, die entlang der Oberfläche der kegelförmigen Ausnehmung synchron zum Abbildungsstrahlengang drehbar angeordnet ist, um auf der inneren Mantelfläche des Auflagekörpers einen Streifen intensiver Hintergrundbeleuchtung entlang von Mantellinien der Auflagefläche zu erzeugen.

Zum Abbilden jeweils eines Streifens der Zylindermantelfläche des Auflagekörpers auf den linear ausgedehnten Bildsensor weist der Abbildungsstrahlengang mindestens eine Abbildungsoptik auf.
Weiterhin enthält der Abbildungsstrahlengang vorteilhaft mindestens ein optisches Element zur Korrektur der perspektivischen Verzerrung des auf den Bildsensor abgebildeten Streifens der Auflagefläche. Das kann zweckmäßig mindestens ein keilförmiges Prisma zur wenigstens teilweisen Korrektur der Verzerrung sein.

In einer vorteilhaften Variante weist der Abbildungsstrahlengang zwei Prismen zur Korrektur der perspektivischen Verzerrung und eine Spiegelfläche zur Faltung des Strahlenganges auf. Hierbei kann die Spiegelfläche die eines separaten ebenen Spiegels sein oder die Spiegelfläche ist auf eines der Prismen als reflektierende hintere Fläche aufgebracht. Es ist ferner zweckmäßig, als Spiegelfläche eine totalreflektierende hintere Fläche eines die Bildverzerrung korrigierenden Prismas aus hochbrechendem Glas einzusetzen.
In einer anderen Variante zur teilweisen optischen Korrektur der perspektivischen Verzerrung der Abbildung kann das erste Prisma geeignet im zylindrischen Auflagekörper integriert sein, indem der Winkel zwischen der Auflagefläche und der kegelförmigen Ausnehmung als Austrittsfläche des Abbildungsstrahlenganges deutlich größer ist als der Winkel der Totalreflexion und als der entsprechende Winkel der kegelförmigen Ausnehmung auf der Seite des Beleuchtungsstrahlengangs.
Ferner ist es möglich, dass der Abbildungsstrahlengang einen gekrümmten Spiegel zur teilweisen Korrektur der perspektivischen Verzerrung und zur Faltung des Strahlenganges aufweist.

Vorzugsweise zur Vermeidung von Kondensatbildung (aber auch zur Erweichung harter Haut) werden zweckmäßig auf Begrenzungsflächen des geformten Auflagekörpers, die durch Schneiden eines Zylindersektors oder -segments als ebene Schnittflächen entstehen, Heizelemente großflächig aufgebracht.

Ferner ist es zweckmäßig, wenn auf der äußeren Mantelfläche des Auflagekörpers außerhalb der Auflagefläche Kalibriereinrichtungen angeordnet und mindestens mit gegen Berührung, Kontamination oder Fremdlicht schützenden Hauben abgedeckt sind, um den Abbildungsstrahlengang kalibrieren und überprüfen zu können.

Die Erfindung basiert auf den Grundüberlegungen, dass im Interesse einer größeren Robustheit gegen Handschweiß und Staub das optische Prinzip der gestörten Totalreflexion (FTIR) verwendet und eine Relativbewegung der Hand (Abrollen) auf einer gekrümmten Aufnahmefläche vermieden werden muss. Gemäß der Erfindung wird deshalb ein feststehender zylinderförmiger Grundkörper mit seiner Mantelfläche als Handauflagefläche und konisch abgeschrägten Stirnflächen zur Beleuchtung und Auslesung jeweils eines Streifens entlang einer Mantellinie der zylindrischen Auflagefläche gewählt. Zur aufeinanderfolgenden Abtastung von Streifen entlang einer Vielzahl von Zylindermantellinien wird dabei mittels eines Drehmechanismus der Abtaststrahlengang mit linearem Bildsensor und - bei linearer Lichtquelle - auch die Beleuchtung um die Zylinderachse des Grundkörpers schrittweise gedreht. Durch die geeignete Synchronisation der mechanischen Scanbewegung um die Zylinderachse und der Geschwindigkeit der Datenauslesung des Bildsensors wird der gesamte Aufnahmevorgang in wenigen Sekunden realisiert, so dass die Hand während dieser Zeit problemlos ruhig gehalten werden kann.
Zum ergonomisch günstigen Anschmiegen der Handfläche an die zylindrische Auflagefläche genügt ein Zylindersektor, an dessen Mantelflächenrand ein Gehäuse anschließt, das den Innenraum der optischen Ausleseanordnung staubund wasserdicht gegen die äußere Umgebung abdichtet.

Mit der erfindungsgemäßen Lösung ist es möglich, die Aufnahme des Papillarlinienmusters einer Hand zu realisieren, die bei einer einmaligen Auflage von Abruckflächen einer Hand eine vollständige optoelektronische Bildaufnahme durch eine fixierte, ergonomisch günstige zylindrische Auflagefläche, die gegen Umgebungseinflüsse abgedichtete Beleuchtungs- und Abbildungsstrahlengänge aufweist, gestattet. Dabei lässt sich die Aufnahmefläche, die lediglich eindimensional geringfügige Auflösungsverluste bei der Entzerrung der Bildaufnahme aufweist, sofort ohne Bildtransformation in einer Ebene abwickeln und stellt somit einen direkten Zugang vom optoelektronisch erfassten gekrümmten Bild zum digitalen ebenen Papillarlinienmuster dar.
Ferner gibt es durch die Anwendung des FTIR-Prinzips, dass bislang auf ebene Aufnahmeflächen beschränkt oder mit gravierenden Nachteilen verbunden war, kaum Probleme mit Handschweiß und Kontrast. Außerdem werden durch die synchronisierte Abtastung im Innern der optischen Anordnung unterhalb der ruhenden Hand die bekannten Probleme mit der bisher üblichen Abrollung der Hand vermieden.

Die Erfindung soll nachstehend anhand von Ausführungsbeispielen näher erläutert werden. Die Zeichnungen zeigen:
- Fig. 1:: eine Prinzipdarstellung eines Grundkörpers für die gestörte Totalreflexion mit zylindrischer Auflagefläche mit kegelförmigen Ausnehmungen konzentrisch zur Achse der zylindrischen Auflagefläche des Grundkörpers,
- Fig. 2:: eine Seitenansicht des Grundkörpers von Fig. 1 mit ausgeschnittenem Zylindersektor zur Definition einer ausreichenden Auflagefläche für eine Handfläche und einer zentralen zylindrischen Ausnehmung entlang der Zylinderachse,
- Fig. 3:: eine Prinzipansicht der erfindungsgemäßen Anordnung mit einem Auflagekörper, wie in Fig. 2 angedeutet, jedoch in Form eines als Halbzylinder ausgeführten Zylindersektors sowie einer Abtastung jeweils entlang von Mantellinien des Halbzylinders, wobei die Elemente des Abbildungsstrahlengangs um die Zylinderachse gedreht werden,
- Fig. 4:: eine Ausführungsform der Erfindung bei Verwendung eines Abtastkörpers (gemäß Fig. 2) und eines ebenen Spiegels zur Faltung des Auslesestrahlengangs in ein Rohr entlang der Zylinderachse sowie optischen Keilen (Prismen) zur vollständigen Korrektur des Perspektivfeh lers,
- Fig. 5:: eine Gestaltung der Erfindung mit einem Auflagekörper gemäß Fig. 3 unter Verwendung von einem Spiegel- und einem Transmissionsprima zur vollständigen Korrektur des perspektivischen Abbildungsfehlers,
- Fig. 6:: eine modifizierte Ausführungsform gemäß Fig. 5 mit einem hochbrechenden Prisma in Totalreflexion und einem optischem Keil zur Korrektur des perspektivischen Abbildungsfehlers,
- Fig. 7:: eine Ausführungsform der Erfindung gemäß Fig. 3 mit einem gekrümmten Spiegel zur Faltung des Auslesestrahlengangs und teilweisen Korrektur des perspektivischen Abbildungsfehlers,
- Fig. 8:: eine modifizierte Ausführungsform nach Fig. 4 jedoch nur mit teilweiser Korrektur des Perspektivfehlers mittels eines Zylindersektors als Auflagekörper, der einen angepassten flacheren Neigungswinkel der kegelförmigen Ausnehmung für den Austritt des Abbildungsstrahlengangs aufweist,
- Fig. 9:: eine Seitenansicht zu den Fig. 4, 6, 7 oder 8 mit einem Zylindersektor (z.B. Viertelzylinder) als Abtastkörper, mit Kalibriereinrichtungen und Heizelementen,
- Fig. 10:: eine Seitenansicht entsprechend den Fig. 3 und 5 mit einem Auflagekörper in Form eines Halbzylinders, der jedoch um der Radius der zylindrischen Ausnehmung gekürzt ist, mit Kalibriereinrichtungen und Heizelementen sowie mit stilisierter Darstellung einer speziellen Auflagetechnik der Hand.

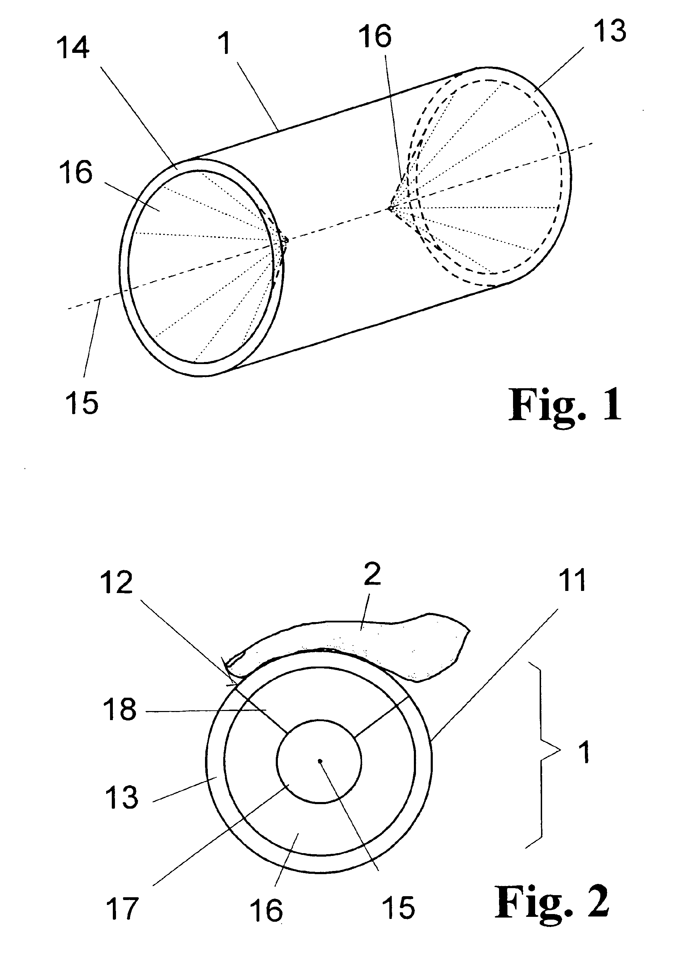

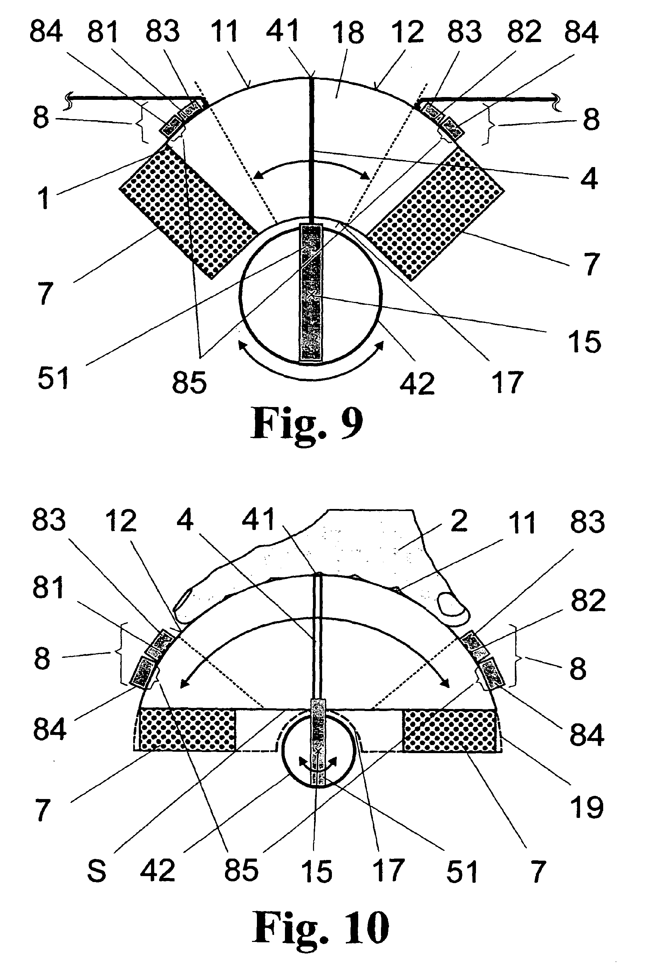

Die Erfindung enthält in ihrem Grundaufbau als Kern der optoelektronischen Aufnahmeeinrichtung - wie in Fig. 1 dargestellt - einen speziell ausgebildeten, optisch transparenten Auflagekörper 1 zur Aufnahme von großflächigen Abdrücke von Hautpartien von Fingern 21 oder der gesamten Hand 2 (nur in Fig. 2). Dabei handelt es sich um einen zylindrischen Auflagekörper 1 aus optischem Material (Glas oder Plast), bei dem zumindest ein Teil der Mantelfläche 11 als Auflagefläche 12 für die Hand 2 derart vorgesehen ist, dass sich die konkav gekrümmte Handfläche an die zylindrische Mantelfläche 11 des Abtastkörpers 1 anschmiegt.
In die beiden Stirnflächen 13 des Körpers 1 sind koaxial zur Zylinderachse 15 kegelförmige Ausnehmungen 16 eingebracht, um einerseits den Beleuchtungsstrahlengang 3 und andererseits den Abbildungsstrahlengang 4 ein- bzw. auszukoppeln, so dass jeweils von einem Streifen 41 (siehe Fig. 9 oder 10) entlang einer Seitenlinie der Mantelfläche 11 die (aufgrund der aufgelegten Hand) gestörte Totalreflexion (FTIR) aufgenommen werden kann.

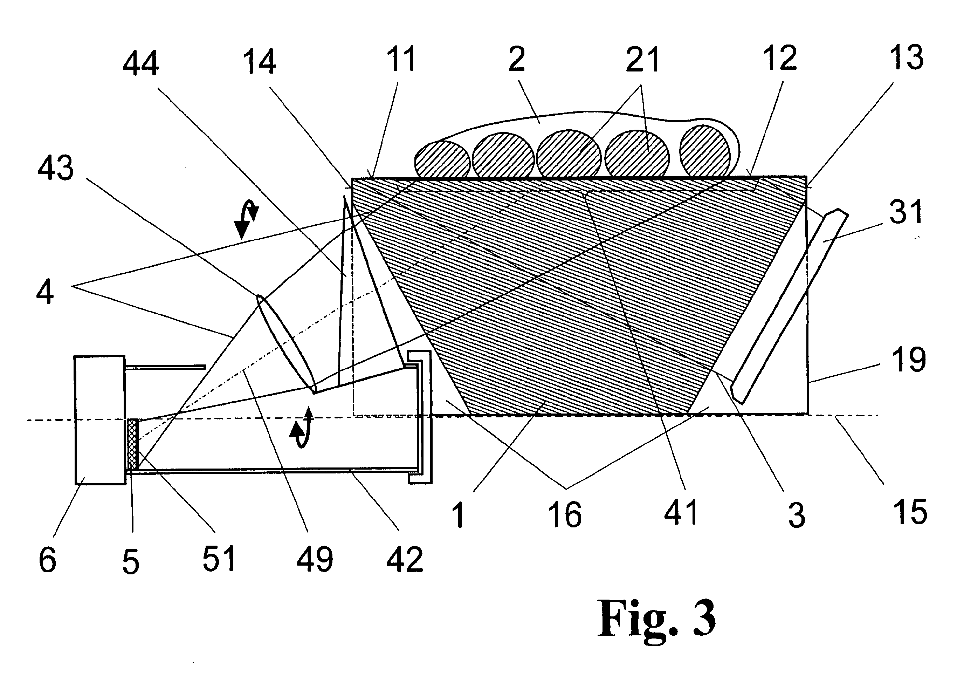

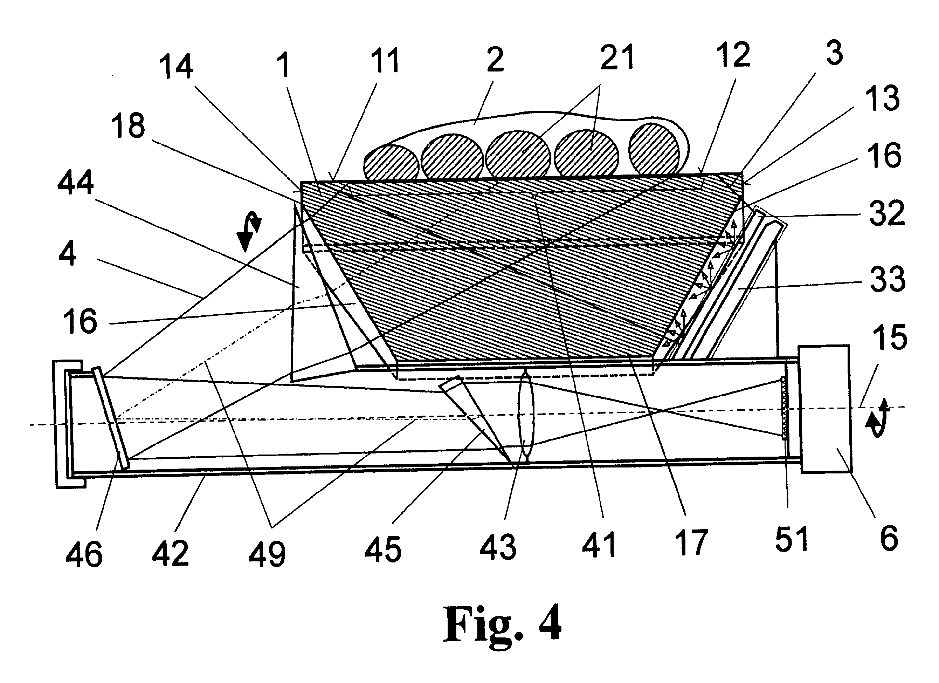

Am Körper 1 ist - wie Fig. 2 als Seitenansicht von Fig. 1 zu entnehmen - vorzugsweise eine weitere Ausnehmung 17 zylindrisch und konzentrisch um die Zylinderachse 15 vorgesehen, um einen durch spiegelnde Elemente gefalteten Abbildungsstrahlengang 4 (nur in Fig. 4-8 gezeigt) auf eine Bildsensoreinheit 5 (nur in Fig. 3 gezeichnet) zu führen. Dadurch ist zur Realisierung einer kompakten Bauform der Anordnung - wie in den Fig. 4-8 gezeigt - eine problemlose Drehung des gefalteten Aufnahmestrahlengangs 4 und/oder des Beleuchtungsstrahlengangs 3 um die Zylinderachse 15 realisierbar, um unterschiedliche Streifen 41 der Auflagefläche 12 (als Teil der Mantelfläche 11) sukzessive fortschreitend in zirkularer Richtung mit beliebiger Dichte abtasten und als Serie linearer Pixelreihen von der Bildsensoreinheit 5 ausgeben zu können.
In die weitere Ausnehmung 17 kann zur ausgerichteten Befestigung und gemeinsamen Drehung aller optischen Komponenten des Abbildungsstrahlengangs 4 um die Zylinderachse 15 ein Rohr 42 (siehe Figuren 4 bis 9) eingesetzt werden.

Da als Aufnahmefläche 12 für eine ganze Innenfläche der Hand 2 nicht mehr als die Mantelfläche 11 eines Halbzylinders 19 oder noch weniger (siehe Fig. 2, 9 oder 10) notwendig ist, wird der Auflagekörper 1 vorteilhaft nur als ein Zylindersektor 18 ausgeführt. Der Zylindersektor 18 entsteht durch Schneiden eines Vollzylinders in dessen Längsachse, beispielsweise durch halbieren, dritteln oder vierteln usw.

Der entstehende Zylindersektor 18 sieht gemäß der Axialschnittdarstellung von Fig. 3 aus wie ein Prisma mit abgeschnittener Spitze.
Der Lichteintrag und die Bildauslesung erfolgen also in Fig. 3 (und allen nachfolgenden Figuren) wie bei einem Prisma, jedoch im Wesentlichen nur eindimensional für jede Axialebene des Zylindersektors 18 separat, da die Ein- und Austrittsflächen als Mantelflächen der kegelförmigen Ausnehmungen 16 konisch sind.
Der Zylindersektor 18 ist ortsfest in einem Gerätegehäuse (nicht dargestellt) gehaltert, wobei die Halterungen die Mantelfläche 11 des Zylindersektors 18 gegen den Innenraum (unterhalb und seitlich von der Auflagefläche 12) staubdicht und spritzwassergeschützt abdichten.

An den kegelförmigen Ausnehmungen 16 des Zylindersektors 18 sind parallel zu den im dargestellten Axialschnitt sichtbaren Kegelmantellinien der kegelförmigen Ausnehmungen 16 einerseits für den Lichteintrag eine Lichtquelle 31 zur Erzeugung einer intensiven Hintergrundbeleuchtung auf der inneren Mantelfläche 11 des Zylindersektors 18 und andererseits ein linear ausgedehnter Bildsensor 51 einer Bildsensoreinheit 5 angeordnet, die innerhalb ein und desselben Axialschnittes des Zylindersektors 18 die Abtastung jeweils eines Streifens 41 der Auflagefläche 12 (für die Handauflage frei zugänglicher Teil der Mantelfläche 11) ermöglichen und sukzessive zirkular um die Zylinderachse 15 bewegt werden, um aus den einzelnen Streifenabtastungen ein zusammengesetztes Abbild der auf der Auflagefläche 12 aufliegenden Hautpartien der Hand 2 zu erhalten.

Der Abbildungsstrahlengang 4 vom parallel zu einer Mantellinie des Zylindersektors 18 verlaufenden Streifen 41 bis zum linear ausgedehnten Bildsensor 51 enthält mindestens eine Abbildungsoptik 43 und wegen der optisch erheblich verzerrten Abbildung mindestens ein optisch korrigierendes Element (hier: Prisma 44) zur wenigstens teilweisen optischen Entzerrung der Abbildung. Im angegebenen Beispiel gemäß Fig. 3 ist zur weiteren (teilweisen) Korrektur der Verzerrung durch eine Schrägstellung des Bildsensors 51 gegenüber der optischen Achse der Abbildungsoptik 43 im Sinne der sogenannten Scheimpflug-Bedingung ausgeführt.

Der gesamte Abbildungsstrahlengang 4 ist an ein drehbares Rohr 42 gekoppelt, dessen Drehachse mit der verlängerten Zylinderachse 15 übereinstimmt und der - wie in Fig. 3 gezeigt - alle Komponenten des Abbildungsstrahlengangs 4 zur optischen Übertragung der Abbildung des Steifens 41 von der Auflagefläche 12 bis hin zur Bildsensoreinheit 5 drehbar haltert und zueinander fixiert aufnimmt. Das Rohr 42 ist drehbar um die Zylinderachse 15 gelagert und wird mittels eines Schrittmotors 6 mindestens im Winkelbereich des Zylindersektors 18 definiert schrittweise um Zylinderachse 15 bewegt. Das kann einerseits eine Schwenkbewegung zwischen zwei Endpunkten oder aber eine umlaufende Drehbewegung mit außerhalb des Zylindersektors 18 aussetzender Abtastung und/oder Beleuchtung sein.

Die Lichtquelle 31 liefert die bei der gestörten Totalreflexion übliche Hintergrundhelligkeit unter flachem Einfallswinkel. Die Hintergrundbeleuchtung wird über die Mantelfläche 11 des Zylindersektors 17 (= Auflagefläche 12 für die Hand 2) reflektiert und vom Abbildungsstrahlengang 4 linienförmig als Streifen 41 aufgenommen, soweit keine Papillarlinien der Handfläche die Totalreflexion stören.
Durch aufliegende Papillarlinien der Haut wird die Totalreflexion partiell gestört, so dass von solchen Stellen kein Licht der Lichtquelle 31 vom Abbildungsstrahlengang 4 auf den Bildsensor 51 abgebildet wird.
Die Lichtquelle 31 ist in diesem Beispiel geeignet an die Form der in die erste Stirnseite 12 eingearbeiteten kegelförmigen Ausnehmung 16 angepasst und parallel zu deren Mantellinien ausgerichtet.
Enthielte der Beleuchtungsstrahlengang 3 nur eine lineare Lichtquelle 33 (was völlig ausreichend ist da die Abbildung nur streifenweise erfolgt), so müsste diese - wie z.B. Fig. 4 gezeigt - ebenfalls drehbar um die Zylinderachse 15 mit dem Rohr 42 in Verbindung stehen. Bei Einsatz einer linearen Lichtquelle kann zur intensiveren Ausleuchtung des abgebildeten Streifens 41 auch vorteilhaft von gerichteter Beleuchtung Gebrauch gemacht werden.

Liegt eine Hand 2 oder ein Finger 21 auf der Auflagefläche 12 auf, wird das Abbild des Streifens 41 mit gestörter Totalreflexion über eine Abbildungsoptik 43 ins Innere des Rohres 42 auf einen Bildsensor 51 abgebildet. Der Schrittmotor 6 bewegt das Rohr 42 und alle daran befestigten Elemente, wie Abbildungsoptik 43, Prisma 44 und Bildsensor 51, synchron in kleinen Winkelschritten auf diskrete Positionen. Das Bild des jeweils neu eingestellten Streifens 41 wird in Ruhestellung des Rohres 42 aufgenommen und nachfolgend aus dem Bildsensor 51 ausgelesen. Während der Auslesung bewegt der Schrittmotor 6 das Rohr 42 in die nächste Abtastposition. Durch die Positionierung wird die Lage des abgetasteten Streifens 41 im Objektfeld, d.h. entlang der (inneren) Mantelfläche 11 des Zylindersektors 18, seitlich (zirkular) bewegt. Die Schrittweite wird so gewählt, dass die gewünschte Auflösung (z.B. 1000 ppi) auf der Auflagefläche 12 erzielt wird.

Die abzutastende Größe der Auflagefläche 12 für eine Hand 2 ist als Höhe mal Breite mit 203,2 mm x 139,7 mm (8" x 5,5") vorgegeben. Die Breite definiert somit die optisch abzutastende Länge des Streifens 41 entlang der Mantellinie 11 des Zylindersektors 18 und die Höhe gibt den zu überstreichenden Abtastweg aufeinander folgender Abtastungen von Streifen 41 orthogonal zur Richtung der Mantellinien des Zylindermantelfläche 11 an. Abhängig vom Radius des Zylindersektors 18 ergibt sich daraus der maximale Winkel, um den sich das Rohr 42 drehen muss, um die vorgeschriebene "Höhe" der Auflagefläche 12 vollständig abzuscannen. Bei 1000 ppi werden also 5500 Pixel (Breite) mal 8000 Pixel (Höhe) große Bilder vom Scanner geliefert.
Bei einem Radius von 200 mm erhält man sehr gute Resultate, da sich dann die Handinnenfläche gut an die zylindrische Mantelfläche 11 des Auflagekörpers 1 anschmiegen kann. Bei kleineren Radien schmiegt sich der Handteller zwar noch besser an, allerdings tritt dann eine zunehmende Stauchung der aufgelegten Hautpartien ein.

Um die Anforderungen an die Abbildungsoptik 43 nicht zu hoch zu schrauben, wird mit Verfahren zur Korrektur der geometrischen Verzerrungen (insbesondere des ungleichmäßigen Abbildungsmaßstabes in Querrichtung der Hand 2) und der Ungleichförmigkeit der Beleuchtung (Intensität) sowie der Empfindlichkeitsverteilung des Bildsensors 51 gearbeitet. Zu diesem Zweck wird ein Bildsensor 51 verwendet, der in Richtung des abgebildeten Streifens 41 wesentlich mehr als die geforderten 5500 Pixel aufweist, z.B. 8000 Pixel (z.B. von Eastman Kodak Corp., US). Die Korrektur kann dann in einer Echtzeit-Logikschaltung vorgenommen werden, die dem Bildsensor 51 und einer angefügten A/D-Wandlung direkt nachgeordnet ist und aus dem Pixeldatenstrom von 8000 Pixeln Zeilenlänge die vorgeschriebenen Zeilenlängen von 5500 Pixel erzeugt.
In der Rotationsrichtung des Abbildungsstrahlenganges 4 wird ohne eine Korrektur geometrischer Fehler gearbeitet. Der Schrittmotor 6 wird so ausgewählt, dass seine Positionierschritte ausreichend eng und genau (reproduzierbar) einstellbar sind. Der perspektivische Abbildungsfehler des Abbildungsstrahlengangs 4 bewirkt, dass eine Abbildung des Bildsensors 51 über die Abbildungsoptik 43 in die Auflagefläche 12 (also in die Mantelfläche 11 des Zylindersektors 18) auf der dem Beleuchtungsstrahlengang 3 zugewandten Seite breitere Pixel und auf der entgegengesetzten Seite schmalere Pixel ergibt. Die MTF ist daher in der Auflagefläche 12 abhängig vom Ort entlang der Mantellinien des Zylindersektors 18. Diese Abhängigkeit kann vernachlässigt werden, wenn die MTF auch im schlechtesten Fall, also auf der Seite des Beleuchtungsstrahlengangs 3, den erforderlichen Minimalwert erreicht. Solche Minimalwerte der MTF sind beispielsweise in den Bildgütestandards der großen Polizeiorganisationen (wie z.B. FBI in den USA, NPA in Japan) festgelegt und müssen durch das Gerät im Rahmen der Gerätezertifizierung nachweislich erreicht werden.

Wird - wie in Fig. 4 gezeigt - ein Zeilensensor 52 als Bildsensoreinheit 5 verwendet und beispielsweise mit 30 MHz Pixeltakt betrieben, dann benötigt ein kompletter Scan über die gesamte Abtastfläche 12 eine Zeit von 2,8 s (ohne Totzeiten). Die Zeit für die Abtastung eines Streifens 41 beträgt etwa 0,5 ms.
Bei derartig kurzen Abtastzeiten eines Streifens 41 ist die Empfindlichkeit des Zeilensensors 52 im Vergleich zu Flächensensoren (wie sie bei ebenen Scannern verwendet werden) sehr gering. Dem sollte durch eine intensive lineare (zeilenförmige) Lichtquelle 33 entgegengewirkt werden. Dafür können hochintensive LED oder Laserdioden verwendet werden, deren Licht zudem in Zeilenrichtung kollimiert wird.

Für Anwender die besonderen Wert auf eine gleichmäßige MTF im gesamten Objektfeld legen, kann die perspektivische Verzerrung der Abbildung auf dem Zeilensensor 51 mit optischen Mitteln auch vollständig korrigiert werden.
Fig. 4 zeigt eine dafür geeignet erweiterte Anordnung, die einen gefalteten Abbildungsstrahlengang 4 mit Korrekturelementen aufweist. Als optischer Auflagekörper 1 wird ein Viertelkreis-Zylindersektor 18 verwendet, wobei der Zylindersektor 18 in der Zeichenebene als Axialschnitt, in dem die lineare Bildabtastung erfolgt, dargestellt ist.

Der Beleuchtungsstrahlengang 3 weist in diesem Beispiel eine lineare Lichtquelle 33 mit einem vorgesetzten Diffuser 32 auf, die mit dem Rohr 42 fest verbunden ist und somit mit den Komponenten des Abbildungsstrahlengangs 4 synchron bewegt wird, so dass - stets schrittweise mit der Abbildung umlaufend - durch die beleuchtungsseitige kegelförmige Ausnehmung 16 hindurch ein schmaler Bereich der Mantelfläche 11 (abzubildender Streifen 41) intensiv bestrahlt wird. Als lineare Lichtquellen 33 kommen LED-Zeilen-Anordnungen oder linear aufgeweitete Laserdioden in Betracht.

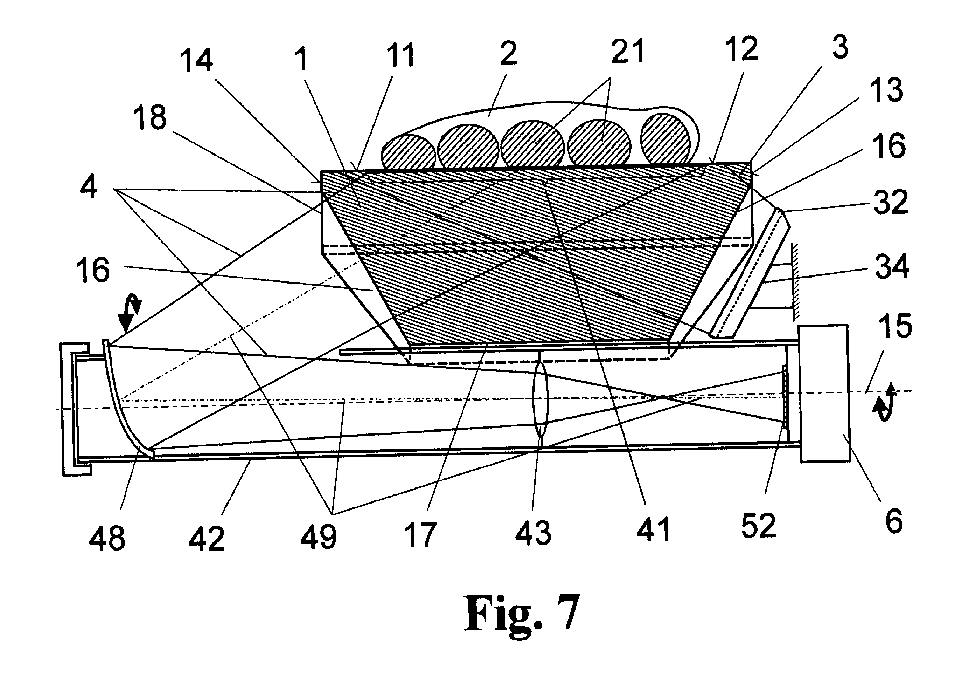

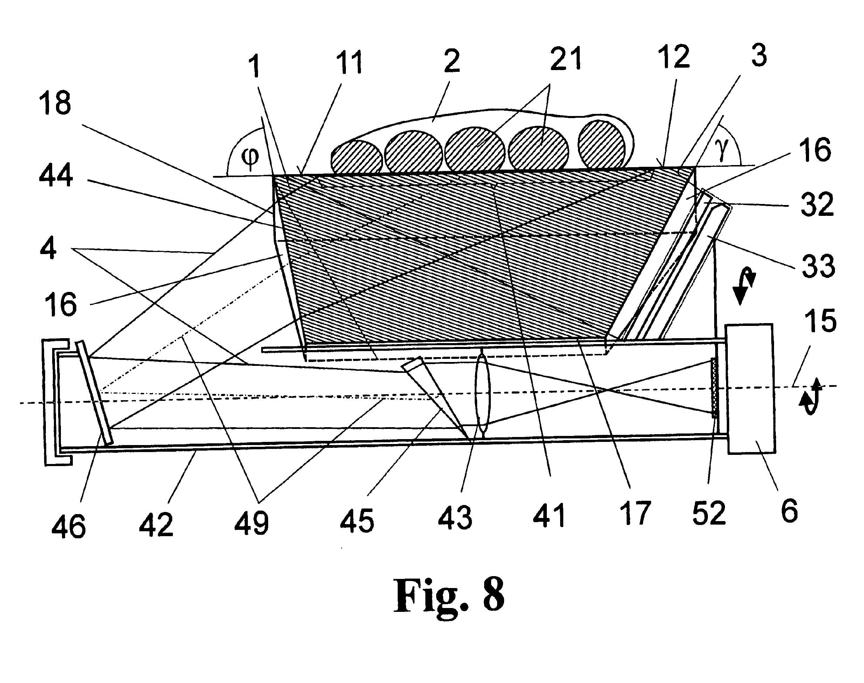

Der Abbildungsstrahlengang 4 ist symbolisiert durch die optische Achse 49 (der Abbildungsoptik 43) sowie durch die Randstrahlen A1 und A2 des abgebildeten Streifens 41 der Hand 2, wobei A1 auf der Seite des Beleuchtungsstrahlengangs 3 liegt und A2 auf der gegenüberliegenden Seite. Die perspektivische Verzeichnung infolge des großen Winkels der Totalreflexion lässt eine geometrische Entzerrung sinnvoll erscheinen, die durch ein erstes Prisma 44 und ein zweites Prisma 45 vollständig im Abbildungsstrahlengang 4 erfolgen kann. Erfolgt die Verzeichnungskorrektur nicht vollständig optisch, kann auch noch elektronisch nachkorrigiert werden (wie z.B. bei Gestaltungsvarianten von Fig. 7 und 8 vorgesehen).

Das Rohr 42 als Trägerelement für die Drehung des Beleuchtungsstrahlengangs 3 und des Abbildungsstrahlengangs 4 wird in diesem Fall in einer weiteren Ausnehmung 17 des Zylindersektors 18, die zylindrisch um die Zylinderachse 15 einen Freiraum für das Rohr 42 darstellt, unterhalb des gesamten Auflagekörpers 1 und konzentrisch zur Mantelfläche 11 drehbar angeordnet.

Die streifenweise Abbildung der aufliegenden Hand 2 erfährt über das erste Prisma 44 eine teilweise Korrektur der perspektivischen Verzeichnung, bevor der Abbildungsstrahlengang 4 durch eine ebene Spiegelfläche 46 in das Rohr 42 hinein gefaltet wird und das zweite Prisma 45 die in diesem Fall vollständig optische Entzerrung der Abbildung übernimmt. Das zweite Prisma 45 sorgt zugleich für die Ausrichtung des Abbildungsstrahlengangs 4 auf die Abbildungsoptik 43, deren optische Achse 49 parallel zur Symmetrieachse des Rohres 42 und zur Zylinderachse 15 liegt und die den linearen Streifen 41 auf den Zeilensensor 52 abbildet. Da die Abbildung auf einen Zeilensensor 52 erfolgt, können die beiden Prismen 44 und 45 sehr schmal ausgeführt werden. Dadurch werden die Massen minimiert, was auch für die Anforderungen an den Drehantrieb (Schrittmotor 6) vorteilhaft ist.

Wenn Finger 21 oder die gesamte Hand 2 auf der Auflagefläche 12 aufliegen, wird die Totalreflexion - äquivalent zur vollflächigen Abbildung bei einem ebenen Auflageprisma - entlang der aktuell abgetasteten Mantellinie des Zylindermantelfläche 11 gestört und das Hell-Dunkel-Muster mit dem Zeilensensor 52 eindimensional erfasst. Da beide Prismen 44 und 45 mit dem Rohr 42 fest verbunden sind, drehen sie sich mit dem Zeilensensor 52 und dem Objektiv 43 synchron um die Zylinderachse 15, so dass von der gesamten Auflagefläche 12 Bilder von beliebig eng benachbarten Streifen 41 entlang der Mantelfläche 11 des Zylindersektors 17 zeitlich aufeinanderfolgend durch schrittweise Drehung des Rohres 42 aufgenommen werden können.

Die Anordnung von Fig. 4 ermöglicht auch noch eine alternative Lösung, bei der das Prisma 44 als Kreissegment mit radialem Dickenzuwachs direkt der kegelförmigen Ausnehmung 15 ortsfest nachgeordnet ist und sich nicht mit dem Rohr 42 bewegt. Optisch führt diese alternative Variante mit feststehendem Prismas 44 genauso zu einer vollständig geometrisch korrigierten Abbildung wie die (in Fig. 4 gezeichnete) mit vom Rohr 42 mitgedrehtem Prisma 44.

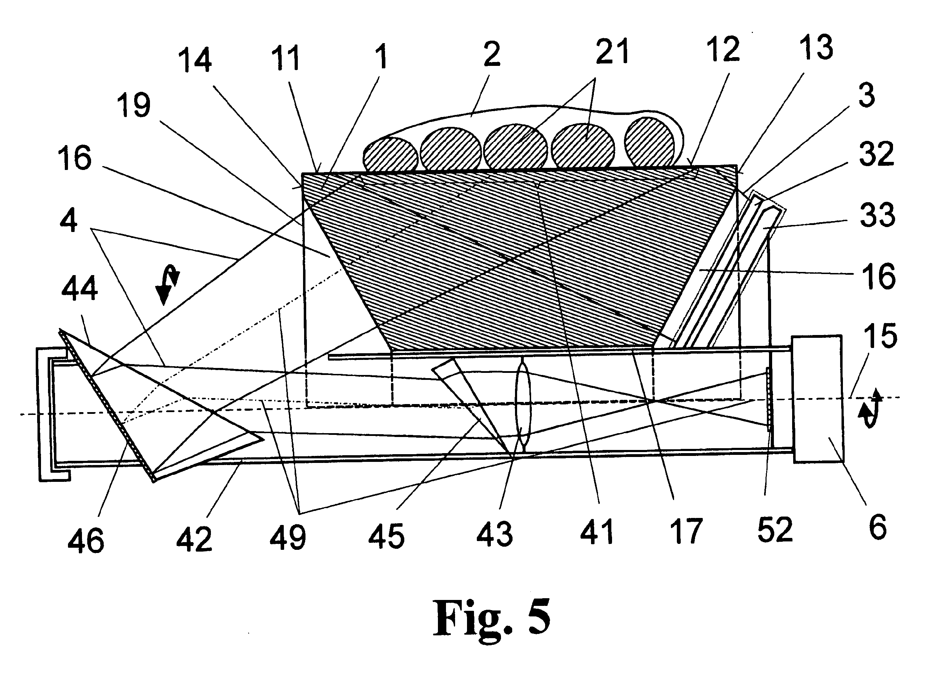

Fig. 5 zeigt einen zylindrischen Körper 1 in Form eines Halbzylinders 19. In diesem Beispiel wird erneut eine lineare Lichtquelle 33 verwendet, die mit dem Rohr 42 fest verbunden ist und somit zusammen mit den Komponenten des Abbildungsstrahlengangs 4 synchron bewegt wird.
Im Abbildungsstrahlengang 4 ist das erste Prisma 44 an der Rückseite direkt mit einer Spiegelfläche 46 versehen, die vorzugsweise aufgedampft ist. Das Prisma 44 dient damit sowohl zur Strahlablenkung als auch als Korrekturelement. Alle übrigen Elemente und Funktionen sind in gleicher Weise, wie zu Fig. 4 beschrieben, vorhanden.

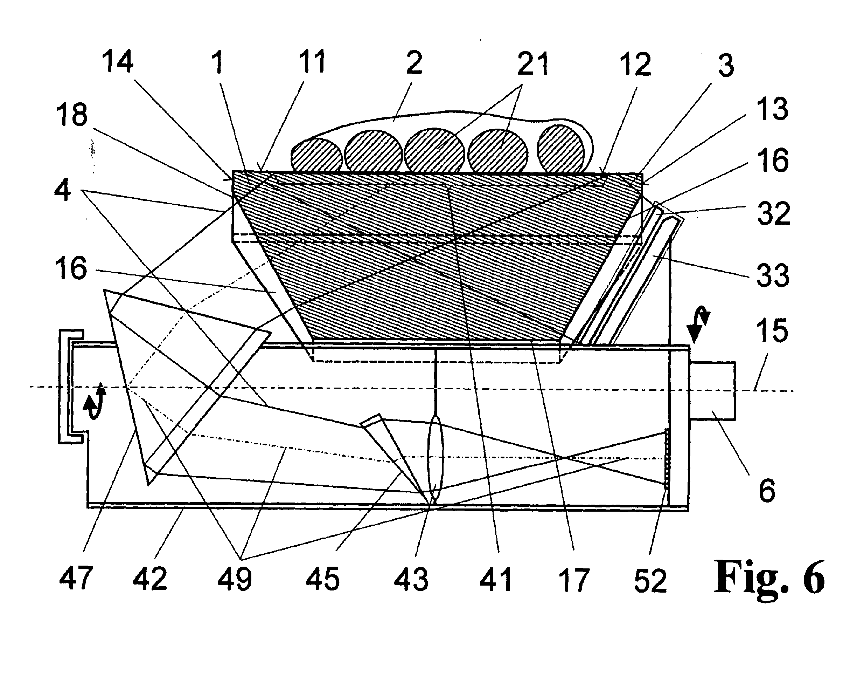

Die Ausgestaltung gemäß Fig. 6 geht erneut von einem Zylindersektor 18, der etwa einen Viertelzylinder mit kegelförmigen Ausnehmungen 16 und einer zylindrischen Ausnehmung 17 darstellt, aus. In dieser Variante der Erfindung wird ein totalreflektierendes Prisma 47 aus einem hochbrechenden Material gefertigt und kann sowohl eine (teilweise) Entzerrung der Abbildung als auch die Faltung des Abbildungsstrahlengangs 4 ausführen.
Im Unterschied zu Fig. 5 ist in Fig. 6 keine separate Spiegeischicht 46 notwendig, da das hochbrechende optische Material (z.B. schweres Flintglas mit n = 1,8) an der hinteren Fläche des Prismas 44 eine Totalreflexion ermöglicht. Da die Faltung des Abbildungsstrahlengangs 4 in diesem Fall mit einem wesentlich flacheren Winkel erfolgt, ist das Rohr 42 mit größerem Durchmesser ausgelegt und hat eine exzentrisch angeordnete Drehachse entlang der Zylinderachse 15, wobei der Schrittmotor 6, wie in den bisherigen Beispielen, die Drehbewegung des Abbildungsstrahlengangs 4 (einschließlich des Zeilensensors 52) und in diesem Fall zusammen mit der linearen Lichtquelle 33 um die Zylinderachse 15 ausführt.

Die Gestaltung der Anordnung nach Fig. 7 unterscheidet sich von den vorherigen Anordnungen vor allem dadurch, dass keine vollständige Entzerrung der Abbildung innerhalb des optischen Strahlengangs 4 erfolgt. Das Rohr 42 ist in diesem Beispiel wieder konzentrisch zur Zylinderachse 15 drehbar und weist neben dem Zeilensensor 52 und der Abbildungsoptik 43 lediglich einen gekrümmten Spiegel 48 zur Faltung des Strahlengangs 4 und zur teilweisen Korrektur der Verzerrung der Abbildung auf. Die restliche Entzerrung des Bildes kann einfach elektronisch erfolgen.

Des Weiteren weist der Beleuchtungsstrahlengang 3 im Unterschied zu den Figuren 4 bis 6 einen Flächenstrahler 34 auf, der zwar ebenfalls einen Diffuser 32 enthält, jedoch ortsfest den gesamten Bereich der beleuchtungsseitigen kegelförmigen Ausnehmung 16 intensiv bestrahlt.

Fig. 8 zeigt eine weitere Variante der Erfindung, bei der im Abbildungsstrahlengang 4 die Abbildungsverzerrung nur teilweise optisch korrigiert wird. Die teilweise Korrektur wird in diesem Fall dadurch erreicht, dass an der Ausleseseite des Auflagekörpers 1 der Winkel ϕ der kegelförmigen Ausnehmung 16 gegenüber der Mantelfläche 11 deutlich größer gewählt ist als der entsprechende Winkel γ an der Seite des Beleuchtungsstrahlengangs 3, so dass die auftretenden Weglängenunterschiede und die daraus resultierende perspektivische Verzerrung - in Abhängigkeit von der Brechzahl des verwendeten Glases - teilweise ausgeglichen werden. Die Änderung des Winkels ϕ der kegelförmigen Ausnehmung 14 bedeutet optisch gesehen ein direkt an den Auflagekörper 1 angefügtes (allerdings wirkungsreduziertes) erstes Prisma 44, dessen mangelhaftes Korrekturergebnis das zweite Prisma 45 nicht ausreichend kompensieren kann. Deshalb wird hier keine vollständige Korrektur erreicht. Dafür wäre es nötig, zusätzliche optische Elemente, wie weitere Prismen oder anstelle der ebenen Spiegelfläche 46 einen gekrümmten Spiegel 48 (wie in Fig. 7) zu verwenden. Die restliche Entzerrung des Bildes kann dann aber auch - wie bereits oben erwähnt - in einfacher Weise elektronisch erfolgen.

Zur Unterstützung des korrekten Auflegens der Hand auf die Auflagefläche 12 kann für alle bisher beschriebenen Varianten der Erfindung ein spezieller Betriebsmodus vorgesehen werden, bei dem das Rohr 42 größere Winkelschritte macht (beispielsweise 8-fach größer als bei einem "normalen" Scan), und außerdem jeweils 8 Pixel in Längsausdehnung des Bildsensors 51 zu einem Pixelsignal zusammengefasst werden.
Das entstehende Bild ist damit in beiden Dimensionen 8-fach kleiner: (B) x (H) = 687 x 1000 Pixel, umfasst also nur 1/64 der Datenmenge. Dieses reduzierte Bild kann mit der 8-fachen Geschwindigkeit ausgelesen werden und steht somit bereits nach 0,35 s zur Verfügung. In einem repetierenden Scanbetrieb, in dem der Schrittmotor 6 das Rohr 42 wie bei der Bewegung eines Scheibenwischers permanent hin- und herdreht, können so etwa drei solcher auflösungsreduzierter Bilder pro Sekunde aufgenommen werden. Durch sofortige Anzeige dieser Bilder auf einem angeschlossenen Bildschirm (nicht gezeichnet) steht somit dem Anwender eine Art Quasi-Livebild zur Verfügung, um das korrekte vollständige Aufliegen der Handinnenfläche einer menschlichen Hand 2 auf der Auflagefläche 12 zu kontrollieren.

In Fig. 9 und 10 werden als Seitenansicht bzw. Querschnitt von oben beschriebenen Anordnungen weitere Ausgestaltungen gezeigt, die Anwendung der Erfindung reproduzierbar und zuverlässiger machen.

Zunächst wird der zylindrische optische Auflagekörper 1 an seinen "Längsschnitt-Flächen" (bei der Erzeugung eines Zylindersektors 18 aus einem Vollzylinder) mit Heizelementen 7 in Kontakt gebracht und dadurch gezielt erwärmt. Die Wärme der Heizelemente 7 breitet sich im optischen Auflagekörper aus und führt nach einer gewissen Aufheizzeit zur gleichmäßigen Erwärmung der Mantelfläche 11. Dies dient der Vermeidung von Kondensatbildung bei kalter Umgebung, und unterstützt durch das Erweichen harter Haut und Anregung einer spontanen Schweißabsonderung der aufgelegten Hand 2 die Bildaufnahme mit hohem Kontrast. Die Fig. 9 zeigt die Heizelemente 7, die vorzugsweise regelbare elektrische Heizelemente (Widerstände, Transistoren o.ä.) sein können, schematisch als vollflächig angebrachte Flächenheizer an den radial orientierten Flächen des Auflagekörpers 1, der in diesem Beispiel ein Viertelkreis-Zylindersektor 18 ist.

Fig. 9 zeigt weiterhin Kalibriereinheiten 8, mit deren Hilfe eine Prüfung und Überwachung der Bildqualitätsparameter durchgeführt werden kann, indem an verschiedenen Orten der Mantelfläche 11 des Zylindersektors 18 beidseitig außerhalb der Auflagefläche 12 Kalibriermarken 81 und 82 angebracht sind. Diese Kalibriermarken 81 und 82 können MTF-Teststrukturen und Geometrietestfelder beinhalten. Zum Schutz gegen die Umgebungseinflüsse wird jeder dieser Bereiche mit einer Haube 83 und ggf. zusätzlich vom Gerätegehäuse (nicht bezeichnet) abgedeckt, wobei die Haube 83 sehr flach sein kann und lediglich dafür sorgt, dass die Teststrukturen nicht berührt werden können und unverfälscht durch den Abbildungsstrahlengang 4 auf den linear ausgedehnten Bildsensor 51 abgebildet werden können.

Die Fig. 9 zeigt ferner eine vorteilhafte Variante der Anordnung nach einer der vorhergehenden Figuren 4, 6, 7 oder 8 in einem Querschnitt, wobei der optische Auflagekörper 1 als Viertelkreis-Zylindersektor 18 ausgebildet. Bei vorgegebener Länge von 203,2 mm (8") für die Auflagefläche 12 der Hand 2 der hat die Mantelfläche 11 eine entsprechende Ausdehnung um die Zylinderachse 15. Diese Dimension der Auflagefläche 12 wird im gestrichelt abgeteilten Bereich durch Hin- und-Her-Drehen des Bildsensors 51 (und des Abbildungsstrahlengangs 4, der hier nur als Rohr 42 sichtbar ist) überstrichen.

Unmittelbar außerhalb dieses Teils des Zylindersektors 18 sind die Kalibriermarken 81 und 82 auf der Mantelfläche 11 angebracht und zum Schutz mit den Hauben 83 abgedeckt. Daneben sind unter weiteren Hauben 84 Kalibrierflächen 85 vorhanden, die sich von den Kalibriermarken 81 und 82 dadurch unterscheiden, dass sich unter den Hauben 84 keine Kalibriermuster befinden, sondern jeweils nur eine leere Teiloberfläche der Mantelfläche 11, wobei die Hauben 84 die Kalibrierflächen 85 gegen Berührung, Verschmutzung und Fremdlicht schützen.

Die leeren Kalibrierflächen 85 unter den Hauben 84 werden verwendet, um die Intensitätsverteilung der zeilenförmigen Hintergrundbeleuchtung zu ermitteln. Dazu werden, wenn das Rohr 42 so gedreht ist, dass der Bildsensor 51 genau diesen Bereich "sieht", die Kalibrierdaten ausgelesen und gespeichert, um für die Ermittlung von Korrekturwerten verwendet zu werden. Mit den Korrekturwerten kann eine vorhandene oder im Betriebsverlauf entstehende Ungleichförmigkeit der Lichtquelle 31, eine Randabschattung der Abbildungsoptik 43 sowie eine ungleichförmige Pixelempfindlichkeit des Bildsensors 51 korrigiert werden.

Zur Erfassung der Kalibriermarken 81 und 82 wird das Rohr 42 mittels des Schrittmotors 6 (in Fig. 9 nicht sichtbar) so bewegt, dass nicht nur der unter den Hauben 83 und 84 befindliche Teil aufgenommen wird, sondern ein Scan von den abgedeckten Bereichen der Hauben 83 und 84 der einen Seite über die Auflagefläche 12 bis auf die abgedeckten Bereiche der Hauben 83 und 84 der anderen Seite ausgeführt wird. Im Ergebnis dieses gesonderten Kalibrierscans liegt ein zweidimensionales Abbild der Kalibriermarken 81 und 82 vor. Mit entsprechend ausgebildeten Marken 81 und 82 an weiteren Orten entlang der (orthogonal zur Zeichnungsebene verlaufenden) Mantelfläche 11 kann dann aus den Kalibrierbilddaten eine Vielzahl von wichtigen Parametern der Bildqualität automatisch berechnet werden. Ähnliche vorteilhafte Lösungen sind in der EP 11 01 187 beschrieben und werden hier als Referenz einbezogen.

Die Gestaltung gemäß Fig. 10 kann als Seitenansicht von Fig. 3 und Fig. 5 aufgefasst werden, indem bei diesem Ausführungsbeispiel ein Halbzylinder 19 als Auflagekörper 1 verwendet wird. Dadurch vergrößert sich die verfügbare "Höhe" der Auflagefläche 12 oder es kann dieselbe Flächengröße, z.B. H x B = 203,2 mm x 139,7 mm (8" x 5,5"), mit geringerem Radius des Halbzylinders 19 und somit mit größerer Krümmung der Auflagefläche 12 hergestellt werden. In letzterem Fall ergibt sich zusätzlich die Möglichkeit, den Daumenabdruck einer Hand 2 in "Griffposition" besser zu erfassen. Eine entsprechende Handhaltung ist in Fig. 10 stilisiert angegeben.

Eine Besonderheit besteht in diesem Beispiel jedoch darin, dass der Zylindersektor 18 (in diesem Fall ein Halbzylinder 19) noch gekürzt wurde, um die zylindrische Ausnehmung 17 einzusparen. Diese Möglichkeit bietet sich auch für alle vorherigen Beispiele (auch bei den kleineren Zylindersektoren), indem anstelle der zylindrischen Ausnehmung 17 einfach ein gerader Schnitt S (parallel zu den beiden geraden Kanten der Mantelfläche 11) den erforderlichen Raum für das Rohr 42 (oder anders geformte Halterungen) für den um die Zylinderachse 15 drehbaren Abbildungsstrahlengang 4 zu schaffen. Dabei darf der gerade Schnitt S jedoch nur soweit die Höhe des Halbzylinders 19 (bzw. des Zylindersektors 18) verkürzen, dass der Abbildungsstrahlgang 4 während seiner drehenden Scanbewegung stets noch aus der kegelförmigen Ausnehmung 16 austreten kann. Das ist insbesondere auch außerhalb der Auflagefläche 12 für die Abtastung der Kalibriereinheiten 8 einzuhalten, wobei diese jedoch einfach durch geeignete räumliche Anbringung entlang der Zylinderlänge einer vollständigen Abbildung zugänglich gemacht werden können.

Alle übrigen Details von Fig. 10, wie Heizelemente 7 und Kalibriereinheiten 8 sind in gleicher Weise beschaffen, wie oben zu Fig. 9 beschrieben. Der einzige Unterschied liegt in dem vergrößerten Scanwinkel zwischen den beiden gestrichelten Linien, die die frei zugängliche Auflagefläche 12 einfassen und somit eine verlängerte Auflagefläche 12 schaffen, die insbesondere für die spezielle Auflageart der Hand 2 geeignet ist.

Der optische Körper 1 (Zylindersektor 18 bzw. Halbzylinder 19) kann aus Glas oder optischem Plast hergestellt werden. Zum Schutz vor Zerkratzen wird - insbesondere auf Plastmaterial - eine Beschichtung aufgebracht oder bei Nichtgebrauch der Auflagefläche diese mit einer entsprechend gewölbten Abdeckung komplett geschützt sein.

### Bezugszeichenliste

- 1: Auflagekörper
- 11: Mantelfläche
- 12: Auflagefläche
- 13: erste Stirnfläche
- 14: zweite Stirnfläche
- 15: Zylinderachse
- 16: kegelförmige Ausnehmungen
- 17: weitere (zylindrische) Ausnehmung
- 18: Zylindersektor
- 19: Halbzylinder

- 2: Hand
- 21: Finger

- 3: Beleuchtungsstrahlengang
- 31: Lichtquelle
- 32: Diffuser
- 33: lineare Lichtquelle
- 34: Flächenstrahler

- 4: Abbildungsstrahlengang
- 41: Streifen
- 42: Rohr
- 43: Abbildungsoptik
- 44: erstes Prisma
- 45: zweites Prisma
- 46: Spiegelfläche
- 47: Prisma (aus hochbrechendem Glas)
- 48: gekrümmter Spiegel
- 49: optische Achse

- 5: Bildsensoreinheit
- 51: (linear ausgedehnter) Bildsensor
- 52: Zeilensensor

- 6: Schrittmotor

- 7: Heizelement

- 8: Kalibriereinrichtungen
- 81,82: Kalibriermarke
- 83, 84: Haube
- 85: Kalibrierfläche

- A1, A2: Randstrahl
- S: Schnittfläche

## Patentansprüche

1. Anordnung zur optoelektronischen Bildaufnahme von Abdrücken großflächiger konkaver Hautpartien, insbesondere ganzer Handabdrücke, bei der ein optischer Auflagekörper mit einer konvexen Auflagefläche zum Auflegen der Hautpartien mit großflächigem Kontakt zur Auflagefläche, um eine Bildaufnahme auf Basis einer gestörten internen Totalreflexion zu realisieren, eine Lichtquelle zum Beleuchten der Auflagefläche und ein Auslesestrahlengang zum Übertragen von unter Totalreflexion reflektiertem Beleuchtungslicht auf einen Bildsensor vorhanden sind, **dadurch gekennzeichnet, dass**
- der Auflagekörper (1) die Grundform eines um eine Zylinderachse (15) nicht notwendig vollständigen Zylinders aufweist, wobei der Auflagekörper (1) eine Zylindermantelfläche (11) mit ausreichendem Bogenmaß und Radius aufweist, um mindestens einen frei zugänglichen Teil der Mantelfläche (11) als Auflagefläche (12) für die großflächige konkave Hautpartie (2) zur Verfügung zu stellen,
- der Auflagekörper (1) eine erste und eine zweite Stirnfläche (13; 14) mit jeweils einer koaxial um die Zylinderachse (15) angeordneten kegelförmigen Ausnehmung (16) aufweist, wobei
- in die kegelförmige Ausnehmung (16) der ersten Stirnfläche (13) eine mindestens parallel zu einer Mantellinie der kegelförmigen Ausnehmung (16) ausgedehnte Lichtquelle (31) angeordnet ist und
- an die kegelförmige Ausnehmung (16) der zweiten Stirnfläche (14) ein Abbildungsstrahlengang (4) angeschlossen ist, der einen entlang einer Seitenlinie der Mantelfläche (11) des Auflagekörpers (1) linienförmig ausgedehnten Streifen (41) der Auflagefläche (12) unter einem Totalreflexionswinkel in einer durch die Zylinderachse (15) und den abgetasteten Streifen (41) vorgegebenen Axialebene auf einen linear ausgedehnten Bildsensor (51) abbildet, und
- der linear ausgedehnte Bildsensor (51) und der Abbildungsstrahlengang (4) um die Zylinderachse (15) des Auflagekörpers (1) synchron drehbar sind, um aufeinander folgend linienförmige Streifen (41) der gestörten Totalreflexion an der beleuchteten Mantelfläche (11) aufgrund der mit der Auflagefläche (12) in Kontakt stehenden Hautpartien (2) aufzunehmen und zu einem zweidimensionalen Bild der aufliegenden Hautpartie (2) zusammensetzen zu können.

2. Anordnung nach Anspruch 1, **dadurch gekennzeichnet, dass**
der Auflagekörper (1) ein Zylindersektor (18) ist.

3. Anordnung nach Anspruch 2, **dadurch gekennzeichnet, dass**
der Auflagekörper (1) ein Halbzylinder (19) ist.

4. Anordnung nach Anspruch 1, **dadurch gekennzeichnet, dass**
zur synchronen Drehung von Bildsensor (51; 52) und Elementen (43, 44) des Abbildungsstrahlengangs (4) ein um die Zylinderachse (15) drehbar gelagertes Rohr (42) vorhanden ist, wobei das Rohr (42) außerhalb der kegelförmigen Ausnehmung (16) des Auflagekörpers (1) angeordnet ist.

5. Anordnung nach Anspruch 1, **dadurch gekennzeichnet, dass**
zur synchronen Drehung von Bildsensor (51) und Elementen (43, 44, 45, 46) des Abbildungsstrahlengangs (4) ein um die Zylinderachse (15) drehbar gelagertes Rohr (42) vorhanden ist, wobei das Rohr (42) in einer koaxial zur Zylinderachse (15) verlaufenden zylindrischen Ausnehmung (17) des Auflagekörpers (1) angeordnet ist.

6. Anordnung nach Anspruch 5, **dadurch gekennzeichnet, dass**
der Abbildungsstrahlengang (4) mittels einer Spiegelfläche (46) in das Rohr (42) und die zylindrische Ausnehmung (17) hinein gefaltet ist.

7. Anordnung nach Anspruch 4 **dadurch gekennzeichnet, dass**
ein Schrittmotor (6) zur sukzessiven Drehung des Rohres (42) um die Zylinderachse (15) vorgesehen ist, um Abbildungsstrahlengang (4) und Bildsensor (51; 52) zur sukzessiven Abtastung von Streifen der Auflagefläche des Auflagekörpers zu bewegen.

8. Anordnung nach Anspruch 7, **dadurch gekennzeichnet, dass**
die Lichtquelle (31) eine lineare Lichtquelle (33) und starr am Rohr (42) befestigt ist, wobei die lineare Lichtquelle (33) parallel zur Oberfläche der kegelförmigen Ausnehmung (16) an der ersten Stirnseite (13) des zylindrischen Auflagekörpers (1) und synchron zum Abbildungsstrahlengang (4) um die Zylinderachse (15) beweglich ist.

9. Anordnung nach Anspruch 1, **dadurch gekennzeichnet, dass**
der Lichtquelle (31) ein Diffuser (32) nachgeordnet ist, um auf der inneren Zylindermantelfläche (11) des Auflagekörpers (1) mindestens entlang einer Mantellinie der Auflagefläche (12) eine intensive Hintergrundbeleuchtung zu erzeugen.

10. Anordnung nach Anspruch 9, **dadurch gekennzeichnet, dass**
die Lichtquelle (31) ein Flächenstrahler (34) ist, der entlang der Oberfläche der kegelförmigen Ausnehmung (16) angeordnet ist, um auf der inneren Mantelfläche (11) des Auflagekörpers (1) auf der gesamten Auflagefläche (12) eine intensive Hintergrundbeleuchtung zu erzeugen.

11. Anordnung nach Anspruch 9, **dadurch gekennzeichnet, dass**
die Lichtquelle (31) eine kollimierte lineare Lichtquelle (33) ist, die entlang der Oberfläche der kegelförmigen Ausnehmung (16) synchron zum Abbildungsstrahlengang (4) drehbar angeordnet ist, um auf der inneren Mantelfläche (11) des Auflagekörpers (1) einen Streifen (41) intensiver Hintergrundbeleuchtung entlang von Mantellinien der Auflagefläche (12) zu erzeugen.

12. Anordnung nach Anspruch 1, **dadurch gekennzeichnet, dass**
der Abbildungsstrahlengang (4) eine Abbildungsoptik (43) zum Abbilden jeweils eines Streifens (41) der Mantelfläche (11) des Auflagekörpers (1) auf den linear ausgedehnten Bildsensor (51; 52) aufweist.

13. Anordnung nach Anspruch 12, **dadurch gekennzeichnet, dass**
der Abbildungsstrahlengang (4) mindestens ein optisches Element (44, 45) zur Korrektur der perspektivischen Verzerrung des auf den Bildsensor (51; 52) abgebildeten Streifens (41) der Auflagefläche (12) aufweist.

14. Anordnung nach Anspruch 13, **dadurch gekennzeichnet, dass**
der Abbildungsstrahlengang (4) mindestens ein keilförmiges Prisma (44) zur Korrektur der perspektivischen Verzerrung des auf den Bildsensor (51; 52) abgebildeten Streifens (41) der Auflagefläche (12) aufweist.

15. Anordnung nach Anspruch 14, **dadurch gekennzeichnet, dass**
der Abbildungsstrahlengang (4) zwei Prismen (44, 45) zur Korrektur der perspektivischen Verzerrung und eine Spiegelfläche (46) zur Faltung des Strahlenganges aufweist.

16. Anordnung nach Anspruch 15, **dadurch gekennzeichnet, dass**
die Spiegelfläche (46) die eines separaten ebenen Spiegels ist.

17. Anordnung nach Anspruch 15, **dadurch gekennzeichnet, dass**
die Spiegelfläche (46) auf eines der Prismen (44, 45) als reflektierende hintere Fläche aufgebracht ist.

18. Anordnung nach Anspruch 15, **dadurch gekennzeichnet, dass**
die Spiegelfläche (46) eine hintere Fläche eines totalreflektierenden Prismas (47) aus hochbrechendem Glas ist.

19. Anordnung nach Anspruch 15, **dadurch gekennzeichnet, dass**
das erste Prisma (44) im zylindrischen Auflagekörper (1) integriert ist, indem der Winkel (ϕ) zwischen der Auflagefläche (12) und der kegelförmigen Ausnehmung (16) als Austrittsfläche des Abbildungsstrahlenganges (4) deutlich größer ist als der Winkel der Totalreflexion und als der entsprechende Winkel (γ) der kegelförmigen Ausnehmung auf der Seite des Beleuchtungsstrahlengangs (3).

20. Anordnung nach Anspruch 13, **dadurch gekennzeichnet, dass**
der Abbildungsstrahlengang (4) einen gekrümmten Spiegel (48) zur teilweisen Korrektur der perspektivischen Verzerrung und zur Faltung des Abbildungsstrahlenganges (4) aufweist.

21. Anordnung nach Anspruch 1, **dadurch gekennzeichnet, dass**
auf radial verlaufenden Begrenzungsflächen des Auflagekörpers (1) in Form eines Zylindersektors (18) Heizelemente (7) großflächig aufgebracht sind, um vorzugsweise Kondensatbildung zu verhindern und Schweißabsonderung zur Erhöhung des Kontrastes zu fördern.

22. Anordnung nach Anspruch 1, **dadurch gekennzeichnet, dass**
auf der äußeren Mantelfläche (11) des Auflagekörpers (1) außerhalb der Auflagefläche (12) Kalibriereinrichtungen (8) angeordnet und mindestens mit Hauben (83, 84) abgedeckt sind, um den Abbildungsstrahlengang (4) kalibrieren und überprüfen zu können.

## Claims

1. Arrangement for optoelectronic image recording of prints of large-area concave skin parts, particularly whole handprints, with an optical support body with a convex support surface for supporting the skin parts with large-area contact with the support surface in order to realize an image recording based on frustrated total internal reflection, a light source for illuminating the support surface, and a readout beam path for transmitting totally internally reflected illumination light to an image sensor, **characterized in that** the support body (1) has the basic shape of a cylinder around a cylinder axis (15), which cylinder is not necessarily complete, the support body (1) has a cylindrical outer surface (11) with a radian measure and radius which are sufficient to provide at least one freely accessible portion of the outer surface (11) as support surface (12) for the large-area concave skin part (2), **in that** the support body (1) has a first end face (13) and a second end face (14), each having a conical recess (16) which is arranged coaxially around the cylinder axis (15), a light source (31) extending at least parallel to a surface line of the conical recess (16) is arranged in the conical recess (16) of the first end face (13), and an imaging beam path (4) is connected to the conical recess (16) of the second end face (14), which imaging beam path (4) images a strip (41) of the support surface (12) that extends in a line-shaped manner along a lateral line of the outer surface (11) of the support body (1) on a linearly extending image sensor (51) at a total internal reflection angle in an axial plane given by the cylinder axis (15) and the scanned strip (41), and **in that** the linearly extending image sensor (51) and the imaging beam path (4) are rotatable synchronously around the cylinder axis (15) of the support body (1) in order to record successive line-shaped strips (41) of the frustrated total reflection at the illuminated outer surface (11) due to the skin parts (2) contacting the support surface (12) and to combine them to form a two-dimensional image of the skin part (2) resting thereon.

2. Arrangement according to claim 1, **characterized in that** the support body (1) is a cylinder sector (18).

3. Arrangement according to claim 2, **characterized in that** the support body (1) is a half-cylinder (19).

4. Arrangement according to claim 1, **characterized in that** a tube (42) which is supported so as to be rotatable around the cylinder axis (15) is provided for synchronous rotation of the image sensor (51; 52) and elements (43, 44) of the imaging beam path (4), wherein the tube (42) is arranged outside the conical recess (16) of the support body (1).

5. Arrangement according to claim 1, **characterized in that** a tube (42) which is supported so as to be rotatable around the cylinder axis (15) is provided for synchronous rotation of the image sensor (51) and elements (43, 44, 45, 46) of the imaging beam path (4), wherein the tube (42) is arranged in a cylindrical recess (17) of the support body (1), which cylindrical recess (17) extends coaxial to the cylinder axis (15).

6. Arrangement according to claim 5, **characterized in that** the imaging beam path (4) is folded into the tube (42) and the cylindrical recess (17) by means of a reflecting surface (46).

7. Arrangement according to claim 4, **characterized in that** a stepper motor (6) is provided for the successive rotation of the tube (42) around the cylinder axis (15) to move the imaging beam path (4) and the image sensor (51; 52) for successive scanning of strips of the support surface of the support body.

8. Arrangement according to claim 7, **characterized in that** the light source (31) is a linear light source (33) which is rigidly fastened to the tube (42), wherein the linear light source (33) is movable parallel to the top of the conical recess (16) at the first end face (13) of the cylindrical support body (1) and synchronous with the imaging beam path (4) around the cylinder axis (15).

9. Arrangement according to claim 1, **characterized in that** the light source (31) has a diffuser (32) arranged downstream thereof in order to generate an intensive background illumination on the inner cylindrical surface (11) of the support body (1) at least along a surface line of the support surface (12).

10. Arrangement according to claim 9, **characterized in that** the light source (31) is a plane projector (34) that is arranged along the surface of the conical recess (16) in order to generate an intensive background illumination on the inner surface (11) of the support body (1) on the entire support surface (12).

11. Arrangement according to claim 9, **characterized in that** the light source (31) is a collimated linear light source (33) which is arranged so as to be rotatable along the surface of the conical recess (16) synchronous with the imaging beam path (4) in order to generate a strip (41) of intensive background illumination along the surface lines of the support surface (12) on the inner surface (11) of the support body (1).

12. Arrangement according to claim 1, **characterized in that** the imaging beam path (4) has at least one imaging optics arrangement (43) for imaging a strip (41) of the cylindrical surface (11) of the support body (1) on the linearly extending image sensor (51; 52).

13. Arrangement according to claim 12, **characterized in that** the imaging beam path (4) contains at least one optical element (44, 45) for correcting the perspective distortion of the strip (41) of the support surface (12) imaged on the image sensor (51; 52).

14. Arrangement according to claim 13, **characterized in that** the imaging beam path (4) has at least one wedge-shaped prism (44) for correcting the perspective distortion of the strip (41) of the support surface (12) imaged on the image sensor (51; 52).

15. Arrangement according to claim 14, **characterized in that** the imaging beam path (4) has two prisms (44, 45) for correcting the perspective distortion and a reflecting surface (46) for folding the beam path.

16. Arrangement according to claim 15, **characterized in that** the reflecting surface (46) is that of a separate plane mirror.

17. Arrangement according to claim 15, **characterized in that** the reflecting surface (46) is arranged on one of the prisms (44, 45) as a reflecting back surface.

18. Arrangement according to claim 15, **characterized in that** the reflecting surface (46) is a back surface of a totally reflecting prism (47) of high-refractive index glass.

19. Arrangement according to claim 15, **characterized in that** the first prism (44) is integrated in the cylindrical support body (1) **in that** the angle (ϕ) between the support surface (12) and the conical recess (16) as exit surface of the imaging beam path (4) is appreciably larger than the angle of the total reflection and than the corresponding angle (γ) of the conical recess on the side of the illumination beam path (3).

20. Arrangement according to claim 13, **characterized in that** the imaging beam path (4) has a curved mirror (48) for partial correction of the perspective distortion and for folding the imaging beam path (4).

21. Arrangement according to claim 1, **characterized in that** heating elements (7) are arranged over a large area on radially extending delimiting surfaces of the support body (1) in the form of a cylinder sector (18) preferably in order to prevent condensation and to promote excretion of perspiration to increase contrast.

22. Arrangement according to claim 1, **characterized in that** calibrating devices (8) are arranged on the outer surface (11) of the support body (1) outside the support surface (12) and are covered at least by hoods (83, 84) in order to calibrate and check the imaging beam path (4).

## Revendications

1. Ensemble pour la prise de vues optoélectronique d'empreintes de parties concaves de la peau qui ont une grande surface, particulièrement d'empreintes de mains entières, ledit ensemble comportant un corps d'appui optique présentant une surface d'appui convexe sur laquelle on place les parties de la peau avec un contact à grande surface par rapport à la surface d'appui, afin de réaliser une prise de vue à base d'une réflexion interne totale perturbée ; une source lumineuse pour éclairer la surface d'appui ; et une marche des rayons de lecture pour transmettre une lumière d'éclairage réfléchissée par réflexion totale vers un capteur d'image, ledit ensemble étant **caractérisé en ce que**
- le corps d'appui (1) présente la forme fondamentale d'un cylindre qui n'est pas forcément complet autour d'un axe de cylindre, ledit corps d'appui (1) comportant une nappe cylindrique (11) ayant une mesure d'arc suffisante et un rayon suffisant pour faire disponible au moins une partie librement accessible de la nappe (11) en tant que surface d'appui (12) pour la partie de peau (2) concave et à grande surface,
- le corps d'appui (1) comporte une première et une deuxième face terminale (13; 14) comportant chacune un creux conique (16) qui est disposé coaxialement autour de l'axe de cylindre (15),
- une source lumineuse (31) s'étendant au moins parallèlement à une génératrice du creux conique (16) est disposée dans le creux conique (16) de la première face terminale (13), et
- une marche des rayons d'image (4) est reliée au creux conique (16) de la deuxième face terminale (14), ladite marche (4) reproduisant l'image d'une bande (41) de la surface d'appui (12), sous un angle de réflexion totale dans un plan axial défini par l'axe de cylindre (15) et par la bande (41) balayé, sur un capteur d'image (51) qui s'étend linéairement, ladite bande (41) s'étendant sous forme linéaire selon une ligne latérale de la nappe (11) du corps d'appui (1), et
- ledit capteur d'image (51) s'étendant linéairement et ladite marche des rayons d'image (4) sont rotatifs en synchronisme autour de l'axe de cylindre (15) du corps d'appui (1) afin d'enrégistrer de successivement des bandes (41) linéaires de la réflexion totale perturbée sur la nappe (11) éclairée et pour en pouvoir composer une image bidimensionnelle de la partie (2) de la peau en appui.

2. Ensemble selon la revendication 1, **caractérisé en ce que** le corps d'appui (1) est un secteur cylindrique (18).

3. Ensemble selon la revendication 2, **caractérisé en ce que** le corps d'appui (1) est un demi-cylindre (19).

4. Ensemble selon la revendication 1, **caractérisé en ce qu'**il y a, pour la rotation synchrone du capteur d'image (51; 52) et des éléments (43, 44) de la marche des rayons d'image (4), un tuyau (42) monté à rotation autour de l'axe de cylindre (15), ledit tuyau (42) étant dispose à l'extérieur du creux conique (16) du corps d'appui (1).

5. Ensemble selon la revendication 1, **caractérisé en ce qu'**il y a, pour la rotation synchrone du capteur d'image (51) et des éléments (43, 44, 45, 46) de la marche des rayons d'image (4), un tuyau (42) monté à rotation autour de l'axe de cylindre (15), ledit tuyau (42) étant dispose dans un creux cylindrique (17) du corps d'appui (1), creux qui s'étend coaxialement par rapport à l'axe de cylindre (15).

6. Ensemble selon la revendication 5, **caractérisé en ce que** la marche des rayons d'image (4) est convoluée dans le tuyau (42) et dans le creux cylindrique (17) par moyen d'une surface de réflexion (46).

7. Ensemble selon la revendication 4, **caractérisé en ce qu'**un moteur pas à pas (6) est prévu pour la rotation successive du tuyau (42) autour de l'axe de cylindre (15) afin de déplacer la marche des rayons d'image (4) et le capteur d'image (51; 52) pour le balayage successif de bandes de la surface d'appui du corps d'appui.

8. Ensemble selon la revendication 7, **caractérisé en ce que** la source lumineuse (31) est une source lumineuse linéaire (33) et fixée rigidement au tuyau (42), ladite source lumineuse linéaire (33) pouvant être déplacée autour de l'axe de cylindre (15) parallèlement à la surface du creux conique (16) de la première face terminale (13) du corps d'appui cylindrique (1) et en synchronisme avec la marche des rayons d'image (4).

9. Ensemble selon la revendication 1, **caractérisé en ce qu'**un diffuseur (32) est disposé en aval de la source lumineuse (31) afin de générer un éclairage de fond intensif sur la nappe interne cylindrique (11) du corps d'appui (1) au moins le long d'une génératrice de la surface d'appui (12).

10. Ensemble selon la revendication 9, **caractérisé en ce que** la source lumineuse (31) est un radiateur de surface (34) disposé le long de la surface du creux conique (16) afin de générer un éclairage de fond intensif sur la nappe interne de cylindre (11) du corps d'appui (1) sur toute la surface d'appui (12).

11. Ensemble selon la revendication 9, **caractérisé en ce que** la source lumineuse (31) est une source lumineuse linéaire collimatée (33) qui est disposée le long de la surface du creux conique (16) de sorte qu'elle puisse être tournée en synchronisme avec la marche des rayons d'image (4) afin de générer une bande (41) d'éclairage de fond intensif le long des génératrices de la surface d'appui (12) sur la nappe interne de cylindre (11) du corps d'appui (1).

12. Ensemble selon la revendication 1, **caractérisé en ce que** la marche des rayons d'image (4) comporte une optique d'imagerie (43) destinée à reproduire l'image d'une bande (41) respective de la nappe (11) du corps d'appui (1) sur le capteur d'image (51 ; 52) linéairement étendu.

13. Ensemble selon la revendication 12, **caractérisé en ce que** la marche des rayons d'image (4) comporte au moins un élément optique (44, 45) destiné à corriger la distorsion en perspective de l'image de la bande (41) de la surface d'appui (12) reproduit sur le capteur d'image (51 ; 52).

14. Ensemble selon la revendication 13, **caractérisé en ce que** la marche des rayons d'image (4) comporte au moins un prisme (44) cunéiforme destiné à corriger la distorsion en perspective de l'image de la bande (41) de la surface d'appui (12) reproduit sur le capteur d'image (51 ; 52).

15. Ensemble selon la revendication 14, caratérisé en ce que la marche des rayons d'image (4) comporte deux prismes (44, 45) destinés à corriger la distorsion en perspective et une surface de réflexion (46) pour la convolution de la marche des rayons.

16. Ensemble selon la revendication 15, **caractérisé en ce que** la surface de réflexion (46) est celle d'un miroir plan particulier.

17. Ensemble selon la revendication 15, **caractérisé en ce que** la surface de réflexion (46) est appliquée sur l'un des prismes (44, 45) en tant que surface arrière réfléchissante.

18. Ensemble selon la revendication 15, **caractérisé en ce que** la surface de réflexion (46) est une surface arrière d'un prisme (47) à réflexion totale en verre hautement réfractif.

19. Ensemble selon la revendication 15, **caractérisé en ce que** le premier prisme (44) est intégré dans le corps d'appui cylindrique (1) en faisant l'angle (ϕ) entre la surface d'appui (12) et le creux conique (16), qui sert de surface de sortie de la marche des rayons d'image (4), nettement supérieur à l'angle de la réflexion totale et à l'angle (γ) correspondant du creux conique du côté de la marche des rayons d'éclairage (3).

20. Ensemble selon la revendication 13, **caractérisé en ce que** la marche des rayons d'image (4) comporte un miroir courbé (48) pour la correction partielle de la distorsion en perspective et pour la convolution de la marche des rayons d'image (4).

21. Ensemble selon la revendication 1, **caractérisé en ce que** des éléments de chauffage (7) sont appliqués de manière à couvrir une grande surface sur des surfaces limites radiales du corps d'appui (1), lesdits éléments de chauffage (7) étant appliqués en forme d'un secteur cylindrique (18) afin d'éviter, de préférence, la formation de condensat et pour propager la sécrétion de sueur pour l'augmentation du contraste.

22. Ensemble selon la revendication 1, **caractérisé en ce que** des installations de calibrage (8) sont disposées sur la nappe extérieure (11) du corps d'appui (1), à l'extérieur de la surface d'appui (12), qui sont couvertes au moins de capots (83, 84) afin de pouvoir calibrer et vérifier la marche des rayons d'image (4).
